# EUROPÄISCHE PATENTSCHRIFT

(11) **EP 0 849 865 B1**
(45) Veröffentlichungstag und Bekanntmachung des Hinweises auf die Patenterteilung: **01.08.2001**
(21) Anmeldenummer: 97121588.4
(22) Anmeldetag: 08.12.1997
(51) Int. Cl.: H02K 15/03, H02K 15/02

(54) **Verfahren zur Herstellung eines permanenterregten niederpoligen Kommutatormotors mit einem hochpoligen Drehimpuls-Geber**
Manufacturing method of a permanent magnets commutator motor with a lower pole number and high resolution rotation sensor
Méthode de fabrication d'un moteur à commutateur à aimants permanents avec un faible nombre de poles et un capteur de rotation à haute résolution

(30) Priorität: 19.12.1996 DE 19653208
(43) Veröffentlichungstag der Anmeldung: 24.06.1998
(73) Patentinhaber: SIEMENS AKTIENGESELLSCHAFT, 80333 München (DE)
(72) Erfinder: Bellmann, Jürgen, 97080 Würzburg (DE); Hartel, Gerd, Dipl.-Ing., 97276 Margetshöchheim (DE); König, Michael, Dipl.-Ing. (FH), 97082 Würzburg (DE)

(56) Entgegenhaltungen:
- EP-A- 0 547 935
- DE-A- 4 005 337
- US-A- 4 049 984
- PATENT ABSTRACTS OF JAPAN vol. 018, no. 003 (E-1485), 6.Januar 1994 & JP 05 244754 A (MITSUBA ELECTRIC MFG CO LTD), 21.September 1993,

## Beschreibung

Die Erfindung bezieht sich auf ein Verfahren zur Herstellung eines permanenterregten niederpoligen Kommutatormotors mit einem hochpoligen Polrad als Drehimpuls-Geber gemäß Patentanspruch 1; derartig hergestellte Elektromotore sind insbesondere zum Einsatz als Stellmotore in elektrischen Kupplungs-Stellantrieben bzw. automatischen Brems-Stellantrieben in Kraftfahrzeugen vorgesehen.

Motore der vorgenannten Art müssen in ihrer Baugröße, insbesondere axial, kompakt und bei feuchtigkeitsdicht geschlossenen Bauart fertigungs- bzw. montagetechnisch einfach aufgebaut sein. Um einen Stellantrieb mit einem derartigen Elektromotor in Abhängigkeit von kleinsten Bewegungsänderungen ansteuern zu können, wird außerdem eine Dreherkennung mit hoher Auflösung gefordert, die bei nur geringem meßtechnischen Schaltungsaufwand vorteilhaft durch ein vielpolig magnetisiertes Polrad als Drehimpuls-Geber erreichbar ist, jedoch technologisch einen relativ großen Durchmesser des Polrades zur Aufbringung der Vielzahl von notwendigen Magnetpolen auf der Umfangssfläche voraussetzt. Üblicherweise werden bei derartigen Forderungen bzw. Voraussetzungen separate Dreherkennungssysteme verwendet, die außerhalb des eigentlichen Motorgehäuses des Elektromotors nach dessen Zusammenbau montiert werden und die durch jeweils einen gesonderten Tragkörper, einen Hall-IC-Drehimpulsempfänger mit gesonderten Anschlußleitungen und ein Polrad axial außerhalb der Lagerstellen des Stellmotors gekennzeichnet sind.

Durch die JP 52 44 754 ist ein Verfahren zur externen Magnetisierung eines komplett montierten Kommutatormotors mit innerhalb des Motorgehäuses am Gehäuseinnenumfang gehaltenen, zu magnetisierenden Stator-Magneten und axial vor dem Kommutatormotor auf der Rotorwelle angeordnetem Polrad bekannt.

Die DE 40 01 273 C2 beschreibt den statischen Aufbau eines Kommutatormotors mit einem Kommutator an seinem einen axialen Ende und einem Polrad eines Frequenzgenerators mit im Vergleich zu dem Kommutator größeren Durchmesser an seinem anderen axialen Ende.

Gemäß Aufgabe der vorliegenden Erfindung soll ein dem gegenüber mit fertigungs- bzw. montagetechnisch geringerem Aufwand herstellbarer Stellmotor mit hochauflösender Dreherkennung geschaffen werden.

Die Lösung der vorgenannten Aufgabe gelingt erfindungsgemäß durch ein Verfahren zur Herstellung eines permanenterregten niederpoligen Elektromotors mit einem hochpoligen Polrad gemäß Patentanspruch 1; vorteilhafte Ausgestaltungen des erfindungsgemäßen Verfahrens sind jeweils Gegenstand der Unteransprüche.

Bei dem erfindungsgemäßen Verfahren läßt sich in kompakter Bauform das hochpolig magnetische Polrad auf einfache Weise zwischen den Lagerstellen des Rotors des Elektromotors und damit feuchtigkeitsgeschützt innerhalb des Motorgehäuses anbringen, ohne daß deswegen auf die Magnetisierung der für die Permanenterregung des Elektromotors vorgesehenen, am Innenumfang des Gehäuses angeordneten magnetisierbaren Schalenteilen bei in das Motorgehäuses eingestecktem Rotor durch eine außen am Motor angesetzte Magnetisierungsvorrichtung verzichtet werden muß, die für die Magnetisierung der Schalenteile ein starkes Magnetfeld mit einer zur Polzahl des für den Drehimpuls-Geber vorgesehenen Polrades unterschiedlichen Polzahl erzeugt.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: in einem axialen Längsschnitt einen Kommutator-Stellmotor für einen elektrischen Kupplungs-Stellantrieb in einem Kraftfahrzeug;
- FIG 2: die axiale kommutatorseitige Stirnansicht des mit der Bürstenhalterung versehenen Motorgehäuses bei abgenommenen kommutatorseitigen Lagerschild;
- FIG 3: die Anordnung gemäß FIG 1 in einer Vormontagestellung vor dem Magnetisieren der für die Dauermagneterregung vorgesehenen magnetischen Schalenteile im Motorgehäuses sowie vor dem Aufdrücken des hochpolig magnetisierten Polrades auf die Rotorwelle und vor der Montage des kommutatorseitigen Lagerschildes mit darin vormontierten Rotorwellen-Lager an dem ansonsten bestückten Motorgehäuse.

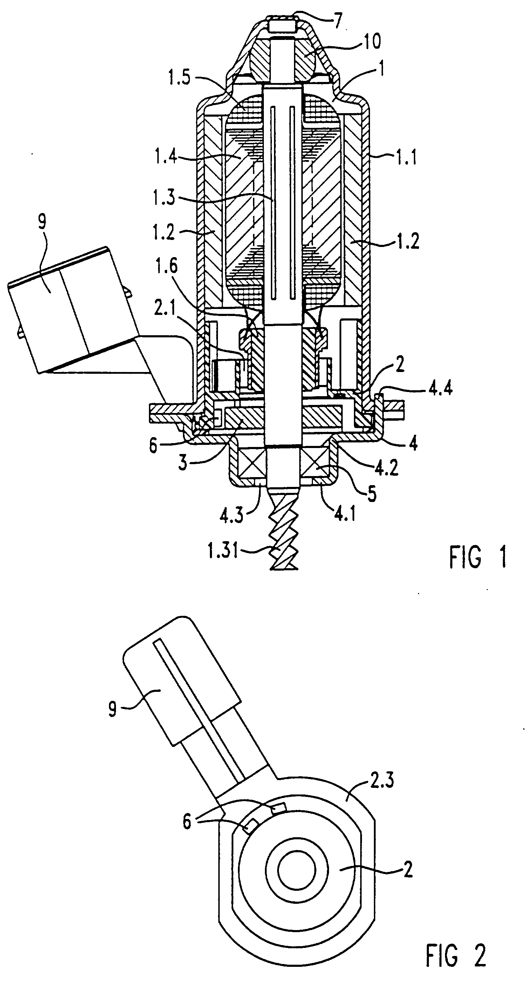

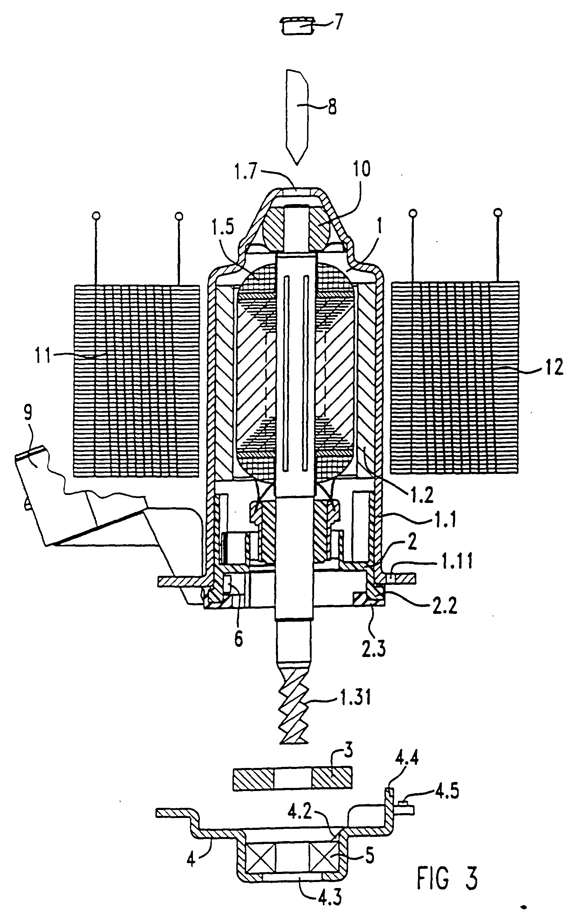

FIG 3 zeigt in einer Explosionsdarstellung anhand eines Kommutator-Stellmotors für einen elektrischen Kupplungs-Stellantrieb in einem Kraftfahrzeug eine Vormontagestellung mit einer oberen ersten Bauteileinheit, einer unteren zweiten Bauteileinheit sowie einem Zwischenbauteil in Form des hochpoligen magnetisierten Polrades; sämtliche Bauteileinheiten bzw. Bauteile sind zu einem Stellmotor gemäß FIG 1 zusammenzubauen.

Die erste obere Bauteileinheit enthält als wesentliche Einzelbauteile ein topfförmiges Motorgehäuse 1.1 mit daran statorseitig fest angeordneten, durch eine Magnetisierungsvorrichtung 11;12 mit für die Erzeugung eines zweipoligen Magnetfeldes am Umfang des Motorgehäuses 1.1 gegenüberliegenden Magnetisierungsspulen 11 bzw.12 zu magnetisierenden Schalenteilen 1.2;1.2 und einem in das Motorgehäuse 1.1 eingesteckten, als Magnetrückschlußteil für die Magnetisierung durch die Magnetisierungsvorrichtung 11;12 mitbenutzten Rotor 1.3-1.6 mit einer an ihrem oberen Wellenende in einem Kalotten-Loslager 10 im Motorgehäuse 1.1 drehbar gelagerten Rotorwelle 1.3 mit darauf gehaltenem Rotorblechpaket 1.4, in das eine an einen Kommutator 1.6 angeschlossene Rotorwicklung 1.5 eingebracht ist, sowie mit einer axial vom offenen Ende des Motorgehäuses 1.1 her einschiebbaren Bürstenhalterung 2 mit Bürsten 2.1. Die Rotorwicklung 1.5 wird über den Kommutator 1.6 beschleifende, in der Bürstenhalterung 2 geführte Bürsten 2.1 von einer äußeren Speise- bzw. Steuerleitung gespeist, die über einen äußeren Anschlußstecker 9 zuführbar ist. Ein dem Drehimpuls-Geber in Form des hochpolig magnetisierten Polrades 3 zugeordneter Drehimpuls-Empfänger 6 in Form einer Schaltungsanordnung mit hier zwei - insbesondere aus FIG 2 ersichtlichen - Hall-IC's ist in vorteilhafter Weise ohne gesonderte Eigenhalterung auf der Bürstenhalterung 2 in Nähe zu dem Polrad 3 mituntergebracht.

Das für eine hochauflösende Dreherkennung als Drehimpuls-Geber vorgesehene hochpolig magnetisierte Polrad 3 wird gemäß dem erfindungsgemäßen Herstellungsverfahren bei der Aufmagnetisierung der für die Permanenterregung des Elektromotors vorgesehenen, am Innenumfang des Motorgehäuses angeordneten magnetisierbaren Schalenteile 1.2;1.2 durch die Magnetisierungsvorrichtung 11,12 in solcher Entfernung gehalten, daß die Magnetisierung des Polrades 3 von dem relativ starken Magnetfeld der Magnetisierungsvorrichtung 11;12 unbeeinflußt bleibt. Erst nach der Magnetisierung der Schalenteile 1.2;1.2 wird das hochpolig magnetisierte Polrad 3 auf das freie eine Wellenende der Rotorwelle 1 aufgedrückt; dabei ist eine Abstützung der Rotorwelle 1 in Gegenrichtung in vorteilhafter Weise dadurch möglich, daß durch eine Öffnung 1.7 im Topfboden des topfförmigen Motorgehäuses 1.1 ein Abstützwerkzeug 8 in Gegendruckrichtung zum Polrad 3 gegen das andere Wellenende der Rotorwelle 1.3 anlegbar ist. Bei einem Kommutatormotor wird in vorteilhafter Weise auch die Bürstenhalterung 2 erst nach dem Magnetisieren der Schalenteile 1.2;1.2 montiert bzw. vorgesehen, daß während des Magnetisierungsvorgangs die Bürsten 2.1 nicht mit dem Kommutatotor 1.6 kontaktiert sind.

Nach dem Aufdrücken des hochpolig magnetisierten Polrades 3 auf das freie eine Wellenende der Rotorwelle 1.3 wird die zweite untere Bauteileinheit, bestehend aus einem Lagerschild 4 und einem darin vormontierten zweiten Lager 5, insbesondere einem Kugel-Festlager, gegen das Motorgehäuse 1.1 geführt und an diesem befestigt; dabei kann zum Aufdrücken des Lagers 5 auf das freie eine Wellenende der Rotorwelle 1.3 wiederum das Abstützwerkzeug 8 vorteilhaft für einen entsprechenden Gegendruck eingesetzt werden.

Nach dem Aufdrücken des Polrades 3 und nach dem Aufziehen des Lagers 5 zusammen mit dem Lagerschild 4 wird das Abstützwerkzeug 8 axial entfernt und die Öffnung 1.7 im Topfboden des topfförmigen Gehäuses 1.1 im Sinne einer insgesamt feuchtigkeitsabgeschlossenen Motoreinheit durch einen Verschlußstopfen 7 abgedichtet.

Ein durch eine Mittelöffnung 4.3 des Lagerschildes 4 herausführbares und gegenüber dem umgebenden Lagerschild 4 und/oder in der Durchführung durch die Bürstenhalterung 2 gegenüber dieser abdichtbares Abtriebs-Wellenende 1.31 der Rotorwelle 1.3 ist im vorliegenden Anwendungsfall mit einer Abtriebsverzahnung, insbesondere einer die Rotorwelle 1.3 axial belastenden Verzahnung, zum Antrieb einer elektrischen Kupplungsstelleinrichtung in einem Kraftfahrzeug versehen. Der durch einen derartigen Abtrieb hervorgerufene Axialdruck auf die Rotorwelle wird in fertigungstechnisch vorteilhafter Weise mit Sicherheit motorseitig dadurch aufgefangen, daß das Rotorwellen-Lager 5 in der einen Axialrichtung gegen den Topfboden 4.1 einer in den Lagerschild 4 eingeformten topfförmigen Vertiefung anliegt und in der anderen axialen Richtung im Sinne eines Festlagers durch aus dem Topfrand 4.2 über den Außenumfang des feststehenden Lagerteils herausgearbeitete Verstemmungen 4.21 fest positionierbar ist.

## Patentansprüche

1. Verfahren zur Herstellung eines permanenterregten niederpoligen Kommutatormotors mit einem rotorseitigen hochpoligen Polrad (3) als 5 Drehimpuls-Geber auf einem Ende der Rotorwelle (1.3) mit den aufeinanderfolgenden Verfahrensschritten:
- Magnetisierbare Schalenteile (1.2) werden am Innenumfang des Motorgehäuses (1.1) befestigt;
- der Rotor (1.2-1.6) wird in dem Motorgehäuse (1.1) positioniert;
- die magnetisierbaren Schalenteile (1.2) werden durch eine außerhalb zum Motorgehäuse (1.1) positionierbare Magnetisiervorrichtung (1.1;1.2) zu Erregerpolen für die Permanenterregung des Elektromotors (1) magnetisiert;
- das hochpolig magnetisierte Polrad (3) wird nach vorheriger Montage der Bürstenhalterung (2) des Kommutatormotors am kommutator- und polradseitigen Ende des Motorgehäuses (1.1) axial außen vor dem auf dem freien einen Wellenende der Rotorwelle (1.3) angeordneten Kommutator (1.6) positioniert.

2. Verfahren nach Anspruch 1 mit dem Verfahrensschritt:
- Die magnetisierbaren Schalenteile (1.2) werden am Innenumfang eines topfförmigen Motorgehäuses (1.1) positioniert;
- der Rotor (1.2-1.6) wird vom offenen Ende des topfförmigen Motorgehäuses (1.1) her in dieses eingesteckt und mit dem andere Wellenende der Rotorwelle (1.3) topfbodenseitig in einem Lager (10), insbesondere Kalottenlager, drehbar positioniert;
- das hochpolig magnetisierte Polrad (3) wird auf das freie eine Wellenende der Rotorwelle (1.3) im Bereich des offenen Ende des Motorgehäuses (1.1) positioniert.

3. Verfahren nach Anspruch 1 und/oder 2 mit dem Verfahrensschritt:
- Das hochpolig magnetisierte Polrad (3) wird mit einem größeren Durchmesser als der des Kommutators (1.6) versehen.

4. Verfahren nach Anspruch 2 und/oder 3 mit dem Verfahrensschritt:
- Das hochpolig magnetisierte Polrad (3) wird in zumindest axialer Nähe zu einer dem Kommutator (1.6) zugeordneten Bürstenhalterung (2) angeordnet;
- auf der Bürstenhalterung (2) wird ein dem hochpolig magnetisierten Polrad (3) zugeordneter Drehimpuls-Empfänger (6), insbesondere Hall-IC-Empfänger, angeordnet.

5. Verfahren nach zumindest einem der Ansprüche 1-4 mit dem Verfahrensschritt:
- Gegen das andere Wellenende der Rotorwelle (1.3) wird beim Positionieren des hochpolig magnetisierten Polrades (3) durch Aufdrücken auf das freie eine Wellenende ein Abstützwerkzeug (8) gegengedrückt.

6. Verfahren nach Anspruch 2 bzw. 5 mit dem Verfahrensschritt:
- Das Abstützwerkzeug (8) wird durch eine topfbodenseitige Öffnung (1.7) des topfförmigen Motorgehäuses (1) hindurchgeführt;
- die Öffnung (1.7) wird nach dem Rückziehen des Abstützwerkzeuges (8) durch eine Verschlußkappe (7) verschlossen.

7. Verfahren nach einem der Ansprüche 1-6 mit dem Verfahrensschritt:
- An dem Motorgehäuse (1.1) wird an seinem offenen Ende nach dem Aufdrücken des hochpolig magntetisierten Polrades (3) ein Lagerschild (4) positioniert;
- die Rotorwelle (1.3) wird in dem Lagerschild (4), über ein Lager (5), insbesondere ein Kugellager, drehbar gelagert.

8. Verfahren nach Anspruch 7 mit dem Verfahrensschritt:
- Durch eine Mittelöffnung (4.3) des Lagerschildes (4) wird ein Abtriebs-Wellenende (1.31) der Rotorwelle (1.3) hindurchgeführt.

9. Verfahren nach Anspruch 8 mit dem Verfahrensschritt:
- Durch die Mittelöffnung (4.3) des Lagerschildes (4) wird ein die Rotorlagerung axial belastendes Abtriebswellenende (1.31) der Rotorwelle (1.3) herausgeführt.

## Claims

1. Method for producing a commutator motor which has permanent-magnet excitation, a small number of poles and a rotor-side pole wheel (3) with a large number of poles as a rotation-pulse encoder on one end of the rotor shaft (1.3), comprising the following successive method steps:
- shell parts (1.2) which can be magnetized are attached to the internal circumference of the motor housing (1.1);
- the rotor (1.2-1.6) is positioned in the motor housing (1.1);
- the shell parts (1.2) which can be magnetized are magnetized by means of a magnetization apparatus (1.1; 1.2) which can be positioned outside the motor housing (1.1) to form excitation poles for the permanent-magnet excitation of the electric motor (1);
- once the brush holder (2) of the commutator motor has been fitted the commutator-side and pole-wheel-side end of the motor housing (1.1), the pole wheel (3) which is magnetized with a large number of poles, is positioned axially externally in front of the commutator (1.6), which is arranged on one free shaft end of the rotor shaft (1.3).

2. Method according to Claim 1, comprising the following method step:
- the shell parts (1.2) which can be magnetized are positioned on the internal circumference of the motor housing (1.1) in the form of a pot;
- the rotor (1.2-1.6) is pushed from the open end of the pot-shaped motor housing (1.1) into said motor housing (1.1) and is positioned with the other shaft end of the rotor shaft (1.3) on the pot-base side in a bearing (10), in particular a cup-type bearing, such that it can rotate;
- the pole wheel (3) which is magnetized with a large number of poles, is positioned on the one free shaft end of the rotor shaft (1.3) in the region of the open end of the motor housing (1.1).

3. Method according to Claim 1 and/or 2 having the following method step:
- the pole wheel (3) which is magnetized with a large number of poles has a larger diameter than that of the commutator (1.6).

4. Method according to Claim 2 and/or 3, having the following method step:
- the pole wheel (3) which is magnetized with a large number of poles is arranged at least in the axial vicinity of a brush holder (2) which is associated with the commutator (1.6);
- a rotation-pulse receiver (6), in particular Hall IC receiver, which is associated with the pole wheel (3) which is magnetized with a large number of poles is arranged on the brush holder (2).

5. Method according to at least one of Claims 1-4 having the following method step:
- a supporting tool (8) is pressed against the other shaft end of the rotor shaft (1.3) by pressing it onto the one free shaft end during positioning of the pole wheel (3) which is magnetized with a large number of poles.

6. Method according to Claim 2 or 5, having the following method step:
- the supporting tool (8) is passed through an opening (1.7) on the pot-base side of the pot-shaped motor housing (1);
- the opening (1.7) is closed once the supporting tool (8) has been pulled back through a sealing cap (7).

7. Method according to one of Claims 1-6 having the following method step:
- a bearing plate (4) is positioned on the open end of the motor housing (1.1) once the pole wheel (3), which is magnetized with a large number of poles, has been pushed on;
- the rotor shaft (1.3) is mounted such that it can rotate in the bearing plate (4) via a bearing (5), in particular a ball bearing.

8. Method according to Claim 7, having the following method step:
- an output drive shaft end (1.31) of the rotor shaft (1.3) is passed through a central opening (4.3) in the bearing plate (4).

9. Method according to Claim 8, having the following method step:
- an output drive shaft end (1.31) of the rotor shaft (1.3) which axially loads the rotor bearing is passed out through the central opening (4.3) in the bearing plate (4).

## Revendications

1. Procédé de fabrication d'un moteur à collecteur à aimants permanents et à petit nombre de pôles, comprenant une roue (3) polaire du côté du rotor, ayant un grand nombre de pôles et servant de générateur d'impulsions de rotation, sur un bout de l'arbre (1.3) du rotor, comportant les stades de procédé successifs suivants :
- des parties magnétisables (1.2) en forme de cuvette sont fixées sur le pourtour intérieur du carter (1.1) du moteur ;
- le rotor (1.2 à 1.6) est mis en position dans le carter (1.1) du moteur ;
- les parties (1.2) magnétisables en forme de cuvette sont magnétisées par un dispositif (1.1 ; 1.2) de magnétisation, pouvant être placé à l'extérieur du carter (1.1) du moteur et pour exciter les aimants permanents du moteur (1) électrique ;
- la roue (3) polaire magnétisée à grand nombre de pôles est, après le montage préalable du porte-balais (2) du moteur à collecteur, mise en place sur l'extrémité, du côté du collecteur et de la roue polaire du carter (1.1) du moteur, axialement à l'extérieur avant le collecteur (1.6) disposé sur le bout libre de l'arbre (1.3) du rotor.

2. Procédé suivant la revendication 1, ayant le stade de procédé :
- les parties (1.2) magnétisables en forme de cuvette sont placées sur le pourtour intérieur d'un carter (1.1) de moteur en forme de pot ;
- le rotor (1.2 à 1.6) est enfilé par l'extrémité ouverte du carter (1.1) de moteur en forme de pot dans celui-ci et, par l'autre bout de l'arbre (1.3) du rotor, est monté tournant du côté du fond du pot dans un palier (10), notamment dans un palier sphérique ;
- la roue (3) polaire magnétisée ayant un grand nombre de pôles est placée sur le bout libre de l'arbre (1.3) du rotor dans la région de l'extrémité ouverte du carter (1.1) du motéur.

3. Procédé suivant la revendication 1 et/ou 2, comprenant le stade de procédé :
- la roue (3) polaire magnétisée ayant un grand nombre de pôles à un diamètre plus grand que celui du collecteur (1.6).

4. Procédé suivant la revendication 2 et/ou 3, ayant le stade de procédé :
- la roue (3) polaire magnétisée ayant un grand nombre de pôles est disposée à proximité au moins axiale d'un porte-balais (2) associé au collecteur (1);
- sur le porte-balais (2), est disposé un récepteur (6) d'impulsions de rotation, notamment un récepteur Hall-IC, associé à la roue (3) polaire magnétisée ayant un grand nombre de pôles.

5. Procédé suivant l'une au moins des revendications 1 à 4, comprenant le stade de procédé :
- sur l'autre bout de l'arbre (1.3) rotorique, est appliqué lors de la mise en position de la roue (3) polaire magnétisée ayant un grand nombre de pôles, une contre-poussée, en appuyant, sur le bout libre de l'arbre, un outil (8) d'appui.

6. Procédé suivant la revendication 2 ou 5, comportant le stade de procédé :
- l'outil (8) d'appui est passé dans une ouverture (1.7) du côté du fond du pot du carter (1) du moteur en forme de pot ;
- l'ouverture (1.7) est fermée par un capuchon (7) de fermeture, après le retrait de l'outil (8) d'appui.

7. Procédé suivant l'une des revendications 1 à 6, comportant le stade de procédé :
- sur le carter (1.1) du moteur est mis en position à son extrémité ouverte, après que la roue (3) polaire magnétisée ayant un grand nombre de pôles a été poussée, un flasque (4) formant palier ;
- l'arbre (1.3) du rotor est monté tournant dans le flasque (4) formant palier, par l'intermédiaire d'un palier (5), notamment d'un roulement à billes.

8. Procédé suivant la revendication 7, comprenant le stade de procédé :
- un bout (1.31) de sortie de l'arbre (1.3) du rotor est passé dans une ouverture (4.3) médiane du flasque (4) formant palier.

9. Procédé suivant la revendication 8, comprenant le stade de procédé :
- un bout (1.31) de sortie de l'arbre (1.3) du rotor, qui charge axialement le palier du rotor, sort par l'ouverture (4.3) médiane du flasque (4) formant palier.
